# EUROPEAN PATENT APPLICATION

(11) **EP 1 918 768 A2**
(43) Date of publication of application: **07.05.2008**
(21) Application number: 07019111.9
(22) Date of filing: 28.09.2007
(51) Int. Cl.: G02F 1/13357

(54) **Spread illuminating apparatus of multiple panel type**

(30) Priority: 26.10.2006 JP 2006291477
(71) Applicant: MINEBEA Co., Ltd., Kitasaku-gun, Nagano-ken (JP)
(72) Inventor: Kitamura, Atsushi, Kitasaku-gun, Nagano-ken (JP); Adachi, Shigeyuki, Kitasaku-gun, Nagano-ken (JP)
(74) Representative: Schaad, Balass, Menzl & Partner AG

(57) **Abstract**

A spread illuminating apparatus (22) includes a plurality of lighting units (12) which are arranged two dimensionally, and each of which includes light sources (14) and a light conductor plate (16) which has a light inlet surface (16a) having the light sources (14) disposed thereat, an opposite end surface (16b) opposite to the light inlet surface (16a), and a major surface (16c) defined as a light outlet surface for the lighting unit (12), wherein an overhang (24) is formed integrally with the light conductor plate (16) so as to protrude from the opposite end surface (16b), and wherein every two adjacent lighting units (12-1, 12-2) of the plurality of lighting units (12) are jointed to each other such that the light outlet surface side faces of the light sources (14) of the lighting unit (12-1) are covered by the overhang (24), and wherein a light diffusing means (25) is disposed at a side surface of the overhang (24) positioned toward the light outlet surface (16c).

## Description

### BACKGROUND OF THE INVENTION

### 1. Field of the Invention

The present invention relates to a spread illuminating apparatus suitable for use as backlight unit of a liquid crystal display device.

### 2. Description of the Related Art

A liquid crystal display (LCD) device is used extensively as a display device for various electronic devices and recently is increasingly superseding a cathode ray tube (CRT) also in a relatively large display device as typified by, for example, a personal computer and a TV set.

For such a large LCD device, a direct light type backlight has been conventionally predominant which is structured such that a plurality of cold cathode lamps (hereinafter referred to as CCFLs as appropriate) as light sources are disposed immediately beneath an LCD panel, and in which light is condensed by an optical sheet and light intensity is uniformed by a diffuser sheet (refer to, for example, Japanese Patent No. 3653274).

Recently, various approaches to be described below are attempted for improving picture image quality and enhancing performance in an LCD device, and accordingly a backlight is becoming required to offer less conventional features.

For example, as a means of solving the visibility issue of movie display on an LCD panel, what is called a "pseudo impulse driving method" is established, in which a black display period is forcibly inserted between every two adjacent frame periods of a picture image display, whereby the pixel brightness response of the LCD panel is brought close to the impulse response.

In the pseudo impulse driving method, it is proposed that the black display period be produced by turning off the backlight, in which case the backlight is required to be capable of turning on and off rapidly. Another proposed method to produce the black display period is to input a black write signal in a picture image signal per frame period, also in which case the backlight is preferably turned on and off rapidly in synchronization with the black write signal in order to achieve an efficient pseudo pulse impulse driving.

Especially, in case of an LCD panel with a rapid response, a method is proposed in which a black write signal is inserted in a picture image signal per scanning line at a predetermined timing, whereby a black region is displayed at an area of a screen composed of a plurality of successive scanning lines, and at the same time the position of the black region displayed is shifted in synchronization with the scanning of the picture image (hereinafter this method is referred to as "black insertion driving method" as appropriate). In this case, it is required that only an area of the entire luminous region of the backlight located immediately beneath the black region be selectively turned off in synchronization with the shifting of the black region.

Also, what is called an "area control method" is proposed, in which the lighting condition of the backlight is partly controlled for enhancing the contrast of a picture image and reducing the power consumption. In this method, the backlight is driven such that when a black region which does not need illumination is present in a picture image as a display tone factor, the area of the luminous region located immediately beneath the black region is selectively turned off.

Unlike the above-described black region (black display period) forcibly inserted for improving the movie display performance, the black region working as a display tone factor for picture image is caused to vary in shape and size on the screen. Consequently, in order to achieve an effective area control, the areas of the luminous region of the backlight, which are adapted to turn on and off independently of one another, must be configured sufficiently minute and precise.

Conventional backlights, however, have the following difficulties in keeping up with the aforementioned improvement of image quality and enhancement of performance.

In a direct light type backlight with CCFLs, since a CCFL has a low response speed, and since the number of CCFLs provided in a backlight is usually restricted, commonly it is difficult to achieve a backlight to suitably match a pseudo impulse driving (especially, the above-described black insertion driving method).

Also, in a direct light type backlight with CCFLs, the luminous region cannot be divided into individual areas in the direction orthogonal to the length of the CCFLs because of its structure, and therefore the areas which are allowed to be area-controlled tend to be very inadequate in size and shape.

Meanwhile, recently, a direct light type backlight is proposed which employs, as light sources, a number of red (R), green (G) and blue (B) light emitting diodes (LEDs), in place of the CCFLs, arranged immediately beneath an LCD panel, wherein a white light is produced by mixing lights from these LEDs. Such a backlight can evade the above-described problems with respect to the pseudo impulse driving and the area control.

However, the photoelectric conversion efficiency is low in achieving a white light by mixing lights from red, green and blue LEDs, thus raising problems with power consumption, heat value from light sources, cost, and the like for achieving a white light with an adequate brightness. Under such circumstances, the present inventors have looked at a quasi-white LED in which a quasi-white light is produced by transmitting a light of a blue LED through a luminescent layer containing yttrium aluminum garnet (YAG) particles, and have proposed to incorporate the aforementioned quasi-white LED in a multiple panel type backlight structured such that a plurality of lighting units are two dimensionally arranged which are each constituted by an edge light type backlight including a light conductor plate having a major surface as a light outlet surface and a side surface at which a light source is disposed. Such a multiple panel type backlight contributes to improving the image quality and enhancing the function with respect to the pseudo impulse driving in the LCD device while solving the problems about power consumption required for generating a white light of an appropriate brightness, heat value from a light source, and cost.

The edge light type backlight as a lighting unit, however, has a peculiar problem that light leakage occurs such that a ball-shaped light called "hotspot" leaks from an LED package and becomes what is called a "stray light" to be viewable from the side of the light outlet surface of the backlight, which degrades the quality of the light of the backlight.

Generally, such a stray light problem can be overcome for an LCD panel with a relatively small display area, for example, a mobile phone LCD panel, in such a manner that the area significantly suffering from the stray light is defined as a non-effective area and located outside the display area of the LCD, whereby the brightness can be kept uniform across the display area of the LCD. This solution, however, cannot be applied to the multiple panel type backlight which includes a plurality of lighting units arranged two dimensionally so as to cover a large LCD panel. That is to say, it is not possible for the non-effective areas of all the lighting units to be located outside the display area of the LCD.

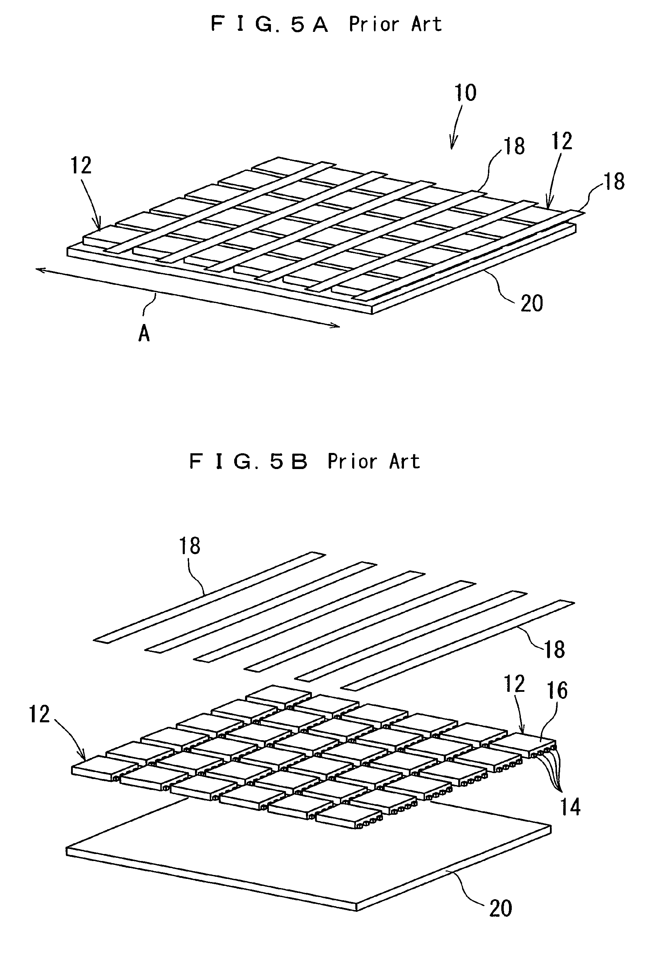

Figs. 5A and 5B are respectively a schematic perspective view and an exploded perspective view of a conventional multiple panel type backlight 10 which includes a plurality (36 in the figures) of lighting units 12, wherein a plurality of strip-shaped cover films 18 (constituted by light shielding films or light reflecting films) are placed so as to cover the areas positioned above light sources (LEDs) 14 and light inlet surfaces of light conductor plates 16, thereby eliminating the influence of the stray light as much as possible. The multiple panel type backlight 10 further includes a rectangular light reflecting film 20 to entirely cover the lower surfaces of all the lighting units 12.

The technique of using light shielding films for the cover films 18 is for lowering the brightness of stray light by absorbing light energy, and therefore the entire brightness of the multiple panel backlight 10 is forced to be lowered. So, the brightness of the LED 14 must be increased in order to provide a sufficient brightness for the multiple panel backlight 10, which results in an increased power consumption. On the other hand, the technique of using light reflecting films for the cover films 18 is to reflect stray light back into the light conductor plate to thereby make an effective use of the light. The utilization efficiency, however, is low, and the brightness of the LED 14 must be increased in order to provide a sufficient brightness for the multiple panel backlight 10, thus inevitably increasing power consumption. And, since both the light shielding film and the light reflecting film used as the cover film 18 do not allow transmission of light, the very existence of the cover film 18 develops a dark area thus deteriorating the brightness uniformity.

### SUMMARY OF THE INVENTION

The present invention has been made in light of the problems described above, and it is an object of the present invention to provide a spread illuminating apparatus of multiple panel type, in which the brightness can be surely kept uniform without influence of stray light while avoiding an increase in power consumption.

In order to achieve the object described above, according to an aspect of the present invention, a spread illuminating apparatus is provided and includes a plurality of lighting units each of which includes a light source and a light conductor plate, and which are arranged two dimensionally, wherein the light conductor plate has a light inlet surface at which the light source is disposed, an opposite end surface opposite to the light inlet surface, and a major surface defined as a light outlet surface for the lighting unit. In the spread illuminating apparatus described above, an overhang is formed integrally with the light conductor plate so as to protrude from a light outlet surface side of either the light inlet surface or the opposite end surface, and every two adjacent lighting units of the plurality of lighting units are jointed to each other in a contact manner such that the overhang is located between the light inlet surface of one lighting unit and the opposite end surface of the other lighting unit, whereby the light outlet surface side face of the light source of the lighting unit is covered by the overhang. The spread illuminating apparatus further includes a light diffusing means disposed at a side surface of the overhang positioned toward the light outlet surface.

Since the spread illuminating apparatus includes the plurality of lighting units arranged two dimensionally, a large luminous area is provided thus constituting a backlight suitable for a large LCD. Also, due to the overhang which is located between the light inlet surface of a lighting unit and the opposite end surface of an adjacent lighting unit so as to cover the light outlet surface side face of the light source of the lighting unit, and which, unlike a cover film conventionally used to deal with stray light from the light source, does not shield or reflect light but effectively utilizes stray light by diffusing and allowing light to exit from the light outlet surface, and due to the lighting diffusing means disposed at the overhang, the brightness can be surely enhanced in a uniform manner without increasing power consumption on the light source.

In the aspect of the present invention, the light inlet surface of the light conductor plate may include either a boss or a recess, and the opposite end surface of the light conductor plate may include either a recess or a boss, wherein the two adjacent lighting units are jointed to each other such that the boss of the light inlet surface/the opposite end surface engages with the recess of the opposite end surface/the light inlet surface.

Due to the engaging structure, the two adjacent lighting units can be securely jointed to each other.

Accordingly, the spread illuminating apparatus of multiple panel type according to the present invention surely achieves an enhanced and uniform brightness by effectively using stray light while reducing power consumption.

### BRIEF DESCRIPTION OF THE DRAWINGS

Fig. 1 is a perspective view of a spread illuminating apparatus of multiple panel type according to an embodiment of the present invention;
Figs. 2A and 2B are schematic side views of a relevant part of the spread illuminating apparatus of Fig. 1, showing alternative exemplary joint configurations between respective light conductor plates of two adjacent lighting units of the spread illuminating apparatus;
Figs. 3A to 3C are overall brightness distribution maps of various spread illuminating apparatuses of multiple panel type, wherein Fig. 3A shows a brightness distribution of the spread illuminating apparatus of multiple panel type according to the embodiment of the present invention, Fig. 3B shows a brightness distribution of a conventional spread illuminating apparatus of multiple panel type, and Fig. 3C shows a brightness distribution of the conventional spread illuminating apparatus of multiple panel type without providing cover films working as measures to deal with stray light problems;
Fig. 4A is an explanatory perspective view of an exemplary structure of securely jointing two adjacent light conductor plates for the spread illuminating apparatus of multiple panel type according to the embodiment of the present invention, and Fig. 4B is a perspective view of portion A of Fig. 4A viewed from direction F indicated in Fig. 4A; and
Figs. 5A and 5B are respectively a schematic perspective view and an exploded perspective view of a conventional spread illuminating apparatus of multiple panel type.

### DETAILED DESCRIPTION OF THE PRESENT INVENTION

An exemplary embodiment of the present invention will hereinafter be described with reference to the accompanying drawings, wherein any components identical with or corresponding to those of the aforementioned conventional art are denoted by the same reference numerals, and a detailed description thereof will be omitted below.

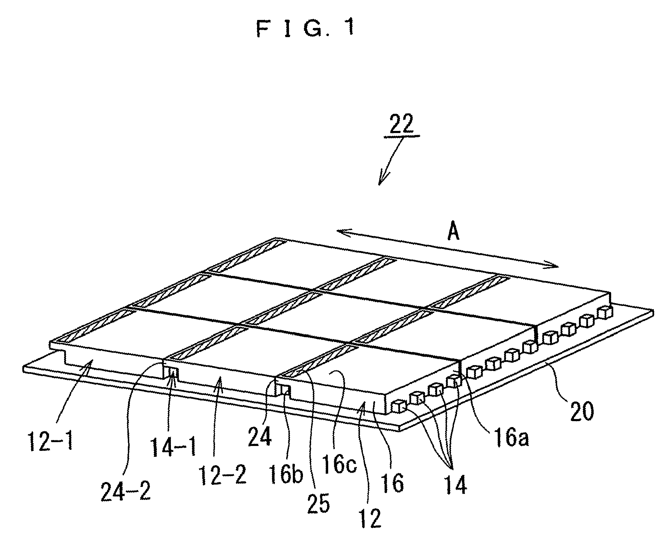

Referring to Fig. 1, a spread illuminating apparatus of multiple panel type (hereinafter referred to simply as "spread illuminating apparatus" as appropriate) 22 according to an embodiment of the present invention includes a plurality of lighting units 12 which each include light sources (for example, LEDs) 14 and a light conductor plate 16, and which are arranged two dimensionally.

The light conductor plate 16 includes a light inlet surface 16a at which the light sources 14 are disposed, an end surface 16b (hereinafter referred to as "opposite end surface" as appropriate) opposite to the light inlet surface 16a, and a major surface 16c defined as "light outlet surface" for the lighting unit 12.

An overhang 24 is formed integrally with the light conductor plate 16 so as to protrude from the light outlet surface side (upper side in the figure) of the opposite end surface 16b. The plurality of lighting units 12 are jointed to one another such that side faces of light sources (for example, 14-1) of a lighting unit (for example, 12-1) facing toward the light outlet surface 16c are covered by an overhang (for example, 24-2) of an adjacent lighting unit (for example, 12-2), wherein a light diffusing mans 25 (indicated by a hatching in the figure) is provided at a side face of the overhang 24 of each lighting unit 12 located toward the light outlet surface 16c. In this connection, though not illustrated, the overhang 24 may alternatively be formed so as to protrude from the light outlet surface side (upper side in the figure) part of the light inlet surface 16a, rather than the opposite end surface 16b.

Thus, the spread illuminating apparatus 22 according to the embodiment of the present invention achieves a large luminous area so as to constitute a backlight suitable for a large LCD by arranging two dimensionally the plurality of lighting units 20 each of which includes the above-structured light conductor plate 16 and the light sources 14. Further, due to the above-described joint configuration of the lighting units 20 with the overhang 24 of the light conductor plate 16 positioned above the light sources 14 and due to the light diffusing means 25 provided on the overhang 24 as described above, the spread illuminating apparatus 22 has its brightness enhanced entirely in a uniform manner.

Unlike the cover film 18 (refer to Figs. 5A and 5B) conventionally used as measures to deal with the stray light problem, the overhang 24 of the light conductor plate 24 combined with the light diffusing means 25 is not required to shield or reflect light but is adapted to diffuse light exiting from the light outlet surface 16c of the light conductor plate 16. Consequently, stray light from the light source 14 can be efficiently utilized, whereby the spread illuminating apparatus 22 can achieve a sufficient brightness in a uniform manner entirely while avoiding an increase in power consumption on the light source 14.

The diffusing means 25 is not limited to any particular configuration and may be constituted, for example, such that a prescribed area of the light outlet surface 16c of the light conductor plate 16 is finely roughened, or that a discrete light diffuser sheet or plate having an appropriate property is attached to a prescribed area of the light outlet surface 16c.

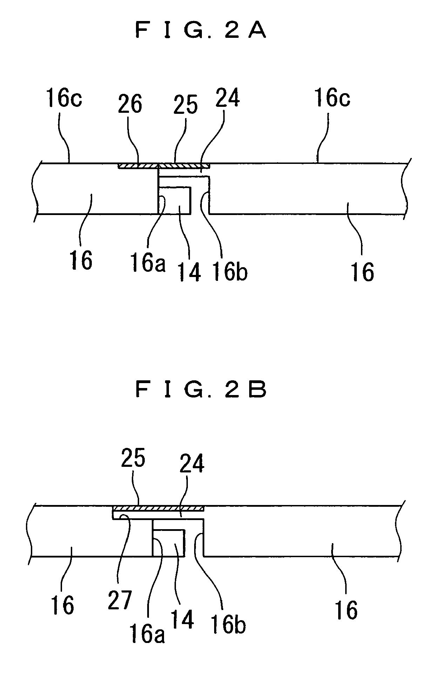

In this connection, an area of the light outlet surface 16c close to the light inlet surface 16a may also be provided with a light diffusing means 26 similar to the light diffusing means 25 as shown in Fig. 2A, or may be provided with a recess 27 to receive the distal portion of the (extended) overhang 24 together with the light diffusing means 25 as shown in Fig. 2B. Such joint configurations are favorable for diffusing and uniforming emission lines near the light inlet surface 16a.

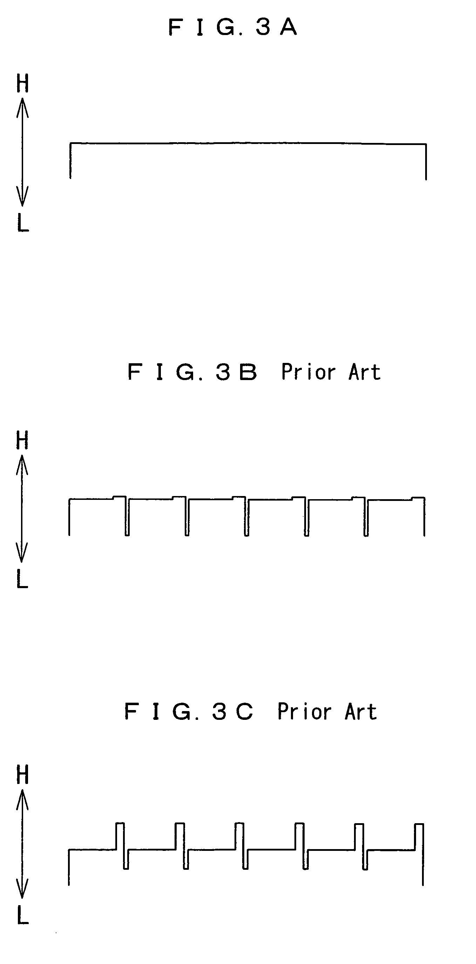

Fig. 3A shows the overall brightness distribution of the spread illuminating apparatus 22 taken with respect to the direction (indicated by arrow A in Fig. 1) oriented orthogonal to the light inlet surface 16a of the light conductor plate 16 so as to cross all the light inlet surfaces 16a at which the light sources 14 of the lighting units 12 are disposed. In the figure, H indicates high brightness, and L indicates low brightness. As shown in Fig. 3A, a uniform brightness is achieved across the entire luminous area of the spread illuminating apparatus 22.

Fig. 3B shows the overall brightness distribution of the conventional spread illuminating apparatus 10 of Fig. 5 taken following Fig. 3A for comparison purpose, specifically with respect to the direction indicated by arrow A in Fig. 1A. The portions of the distribution exhibiting a low brightness correspond to the areas positioned above the light sources 14 and light inlet surfaces of light conductor plates 16, where the cover films 18 are placed. Thus, it is known that the brightness distribution is effected by the cover films 18.

Fig. 3C shows, for reference purpose, the overall brightness distribution of the conventional spread illuminating apparatus 10, which, however, eliminates the cover films 18. The portions of the distribution exhibiting a high brightness correspond to the aforementioned areas positioned above the light sources 14 and light inlet surfaces of light conductor plates 16 but not provided with the cover films 18 thereabove. From Figs. 3B and 3C, it is clear that the cover film 18 is effective in blocking the stray light but does not contribute to successfully achieving a uniform brightness distribution.

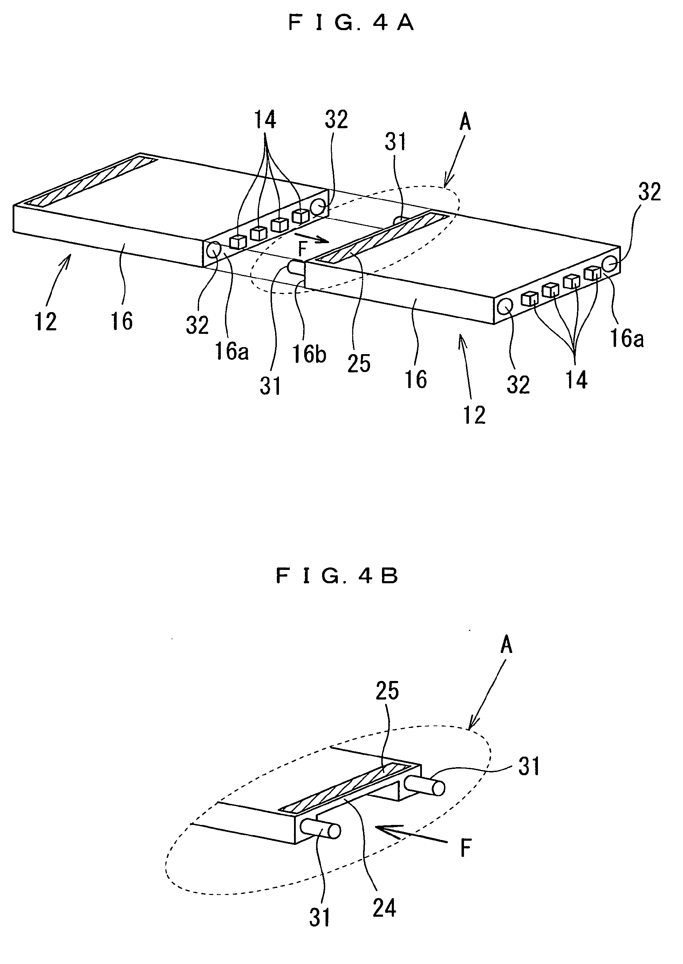

Referring to Figs. 4A and 4B, bosses (two pin-like members in the figure) 31 are provided at the opposite end surface 16b of the light conductor plate 16 while recesses (two in the figure) 32 are formed at the light inlet surface 16a, and two adjacent lighting units 12 are jointed to each other with the bosses 31 of one lighting unit 12 engaging with the recess 32 of the other lighting unit 12. With this structure, the two adjacent lighting units 12 can be securely jointed to each other. In this connection, the bosses 31 may alternatively be provided at the light inlet surface 16a while the recesses 32 are formed at the opposite end surface 16b.

In the example of Fig. 4A, the two bosses 31 are provided respectively at both ends of the opposite end surface 16b, and the two recesses 32 are formed respectively at both ends of the light inlet surface 16a. If the light sources 14 are constituted by LEDs, a plurality (more than two) of recesses or bosses can be each provided between two adjacent LEDs, whereby two adjacent lighting units 12 can be jointed to each other more securely, which results in achieving more stable brightness and brightness uniformity.

While the present invention has been illustrated and explained with respect to the exemplary embodiment, it is to be understood that the present invention is by no means limited thereto but encompasses all changes and modifications that will become possible within the scope of the appended claims.

## Claims

1. A spread illuminating apparatus (22) comprising a plurality of lighting units (12) each of which comprises a light source (14) and a light conductor plate (16), and which are arranged two dimensionally,
**characterised in that**: the light conductor plate (16) has a light inlet surface (16a) at which the light source (14) is disposed, an opposite end surface (16b) opposite to the light inlet surface (16a), and a major surface (16c) defined as a light outlet surface for the lighting unit (12), wherein an overhang (24) is formed integrally with the light conductor plate (16) so as to protrude from a light outlet surface side of one of the light inlet surface (16a) and the opposite end surface (16b), and wherein every two adjacent lighting units (12) of the plurality of lighting units (12) are jointed to each other in a contact manner such that the overhang (24) is located between the light inlet surface (16a) of one lighting unit (12) and the opposite end surface (16b) of the other lighting unit (12), whereby a side face of the light source (14) of the lighting unit (12), the side face facing toward the light outlet surface (16c), is covered by the overhang (24); and that a light diffusing means (25) is disposed at a side surface of the overhang (24) positioned toward the light outlet surface (16c).

2. A spread illuminating apparatus (22) according to claim 1, wherein the light inlet surface (16a) of the light conductor plate (16) comprises a boss (31), the opposite end surface (16b) of the light conductor plate (16) comprises a recess (32), and wherein the two adjacent lighting units (12) are jointed to each other such that the boss (31) of the light inlet surface (16a) engages with the recess (32) of the opposite end surface (16b).

3. A spread illuminating apparatus (22) according to claim 1, wherein the light inlet surface (16a) of the light conductor plate (16) comprises a recess (32), the opposite end surface (16b) of the light conductor plate (16) comprises a boss (31), and wherein the two adjacent lighting units (12) are jointed to each other such that the boss (31) of the opposite end surface (16b) engages with the recess (32) of the light inlet surface (16a).
